# EUROPÄISCHE PATENTSCHRIFT

(11) **EP 1 177 378 B1**
(45) Veröffentlichungstag und Bekanntmachung des Hinweises auf die Patenterteilung: **28.09.2005**
(21) Anmeldenummer: 00941888.0
(22) Anmeldetag: 27.04.2000
(51) Int. Cl.: F02P 5/152, F02P 15/08

(54) **VERFAHREN UND VORRICHTUNG ZUR KLOPFREGELUNG BEI AUSFALL DES PHASENGEBERS**
METHOD AND DEVICE FOR ELECTRONIC SPARK CONTROL IN THE EVENT OF THE FAILURE OF THE PHASE DETECTOR
PROCEDE ET DISPOSITIF DE REGULATION ANTI-CLIQUETIS EN CAS DE DEFAILLANCE D'UN DETECTEUR DE PHASE

(30) Priorität: 03.05.1999 DE 19920016
(43) Veröffentlichungstag der Anmeldung: 06.02.2002
(73) Patentinhaber: ROBERT BOSCH GMBH, 70442 Stuttgart (DE)
(72) Erfinder: TORNO, Oskar, D-71701 Schwieberdingen (DE); HEINSTEIN, Axel, D-71299 Wimsheim (DE); KLUTH, Carsten, D-70469 Stuttgart (DE); HAEMING, Werner, D-74861 Neudenau (DE); BAEUERLE, Michael, D-71706 Markgroeningen (DE); FRANKE, Steffen, Brentwood, Essex CM14 5BT (GB)
(86) Internationale Anmeldenummer: PCT/DE2000/001323
(87) Internationale Veröffentlichungsnummer: WO 2000/066888

(56) Entgegenhaltungen:
- EP-A- 0 375 635
- DE-A- 4 125 677
- DE-A- 4 229 773
- US-A- 5 572 973
- PATENT ABSTRACTS OF JAPAN vol. 009, no. 087 (M-372), 17. April 1985 (1985-04-17) & JP 59 215964 A (HITACHI SEISAKUSHO KK), 5. Dezember 1984 (1984-12-05)

## Beschreibung

### Stand der Technik

Die Erfindung betrifft ein Verfahren und eine Vorrichtung zur Klopfregelung eines Verbrennungsmotors nach Gattung der unabhängigen Ansprüche.

In einem Verbrennungsmotor können in Folge einer Selbstentzündung des noch nicht von der Flammenfront erfaßten Frischgemisches anormale Verbrennungsvorgänge auftreten, die mit Klopfen bezeichnet werden. Länger andauerndes Klopfen kann aufgrund der erhöhten thermischen Belastung und der auftretenden Druckwellen zu Schäden an den Bauteilen der Brennkammer führen.

Ein wichtiger Parameter, der die Klopfneigung des Verbrennungsmotors beeinflußt, ist der Zündzeitpunkt. Wird das in der Brennkammer befindliche Kraftstoff-Luft-Gemisch zu früh gezündet, tritt klopfende Verbrennung auf. Deshalb wird als eine mögliche Maßnahme, nach Feststellung eines Klopfvorgangs im Verbrennungsmotor diesen bei den darauffolgenden Verbrennungen zu unterbinden, der Zündzeitpunkt nach spät verschoben.

Eine zu späte Zündung ist mit einem Wirkungsgradverlust verbunden, deshalb wird in Verbrennungsmotoren eine Klopfregelung eingesetzt, die zum einen feststellt, ob eine klopfende Verbrennung stattgefunden hat. Dieser Teil der Klopfregelung wird Klopferkerinung genannt. Zum anderen wird bei der Klopfregelung eine Verstellung des Zündwinkels vorgenommen. Eine derartige Klopfregelung ist beispielsweise aus der WO 91/14097 bekannt. Es können jedoch zur Verringerung der Klopfempfindlichkeit eines Verbrennungsmotors noch andere Stellgrößen verändert werden, wie zum Beispiel das Kraftstoff-Luftgemisch, die Füllung, das Verdichtungsverhältnis und der Motorbetriebspunkt.

Aus DE-A-42 29 773 ist ein Verfahren zur Zylindererkennung von Brennkraftmaschinen bekannt, wobei Sicherheitsmaßnahmen für einen Notlaufbetrieb eingeleitet werden, wie zum Beispiel die Ausgabe von Doppelzündungen, d.h. es wird in jeder Kurbelwellenumdrehung bei einem fest vorgegebenen Zündwinkel gezündet.

Es ist weiterhin bekannt, daß die Klopfregelung zylinderindividuell vorgenommen wird, d.h., daß sowohl die Klopferkennung als auch die Verstellung des Zündwinkels für jeden Zylinder separat erfolgt. Bauliche Unterschiede der Zylinder und eine ungleiche Verteilung der Klopfsensoren und die damit verbundenen zylinderspezifischen Klopfsignale führen zu zylinderspezifischen Unterschieden in der Klopfregelung, sodaß mit einer zylinderindividuellen Klopfregelung die Klopfempfindlichkeit bei gleichzeitiger Optimierung des Wirkungsgrades verringert wird.

Fällt der Phasengeber aus, der die der Synchronisation der Zündung und der Klopfregelung zugrunde gelegten Signale liefert, werden an die bis dahin zylinderindividuell durchgeführte Klopfregelung neue Anforderungen gestellt. Dabei soll die Klopfregelung wegen einer möglichen Schädigung des Verbrennungsmotors mit größter Sicherheit und zur Erzielung eines maximalen Wirkungsgrades mit größter Genauigkeit funktionieren.

### Vorteile der Erfindung

Das erfindungsgemäße Verfahren und die erfindungsgemäße Vorrichtung haben den Vorteil, daß in Abhängigkeit von der Aktivierung einer Doppelzündung, die Klopfregelung unterschiedlich gestaltet wird. Es werden als Notstrategie nicht zylinderindividuelle Maßnahmen aktiviert, die die Klopfregelung beeinflussen. Da sich dies während der Laufzeit des Verbrennungsmotors oder nach Neustart ändern kann, ist es auch vorteilhaft, daß sich das erfindungsgemäße Verfahren und die erfindungsgemäße Vorrichtung dem jeweiligen Betriebszustand des Verbrennungsmotors anpaßt. So kann ein maximaler Wirkungsgrad für die Verbrennung und eine hohe Sicherheit für die Klopfregelung verwirklicht werden. Beispielsweise ist im erfindungsgemäßen Verfahren enthalten, daß trotz Ausfall des Phasengebers noch eine optimale Klopfregelung erfolgen kann, wenn durch eine andere Maßnahme die Synchronisation wiederhergestellt werden konnte.

Weitere Vorteile, die sich aus den erfindungsgemäßen Ausführungsbeispielen ergeben, betreffen die speziellen, dort verwendeten nicht zylinderindividuellen Maßnahmen. Sie bieten eine hohe Sicherheit bei der Unterbindung von Klopfvorgängen durch die Wahl des Klopferkennungsschwellwerts oder durch die Wahl des Zündwinkels.

Eine weitere Verbesserung der Erfindung läßt sich erreichen, wenn das erfindungsgemäße Verfahren und Vorrichtung mit den verschiedenen nicht zylinderindividuellen Maßnahmen in ein Universalsteuergerät integriert werden, das je nach Verbrennungsmotortyp und Betriebszustand eine spezielle nicht zylinderindividuelle Maßnahme auswählt. Dieses Universalsteuergerät kann für verschiedene, der Gattung der unabhängigen Ansprüche entsprechende, Verbrennungsmotortypen verwendet werden, wobei dieses die jeweils am besten geeignete nicht zylinderindividuelle Maßnahme auswählt.

### Zeichnung

Die Ausführungsbeispiele der Erfindung sind in Zeichnungen dargestellt und in der nachfolgenden Beschreibung näher erläutert.

Es zeigen
die Figur 1 schematisch den Aufbau eines 4-Zylinder-Verbrennungsmotors mit Zündsteuergerät und Klopfregelung,
die Figur 2 einen Zeitstrahl, der die Zündzeitpunkte eines 4-Zylinder-Verbrennungsmotors veranschaulicht,
die Figur 3 ein Flußdiagramm, das die erfindungsgemäße Vorgehensweise bei Ausfall des Phasengebers verdeutlicht,
die Figur 4 ein Flußdiagramm, das als weiteres Ausgestaltungsbeispiel die Vorgehensweise eines Universalsteuergeräts veranschaulicht.

### Beschreibung der Ausführungsbeispiele

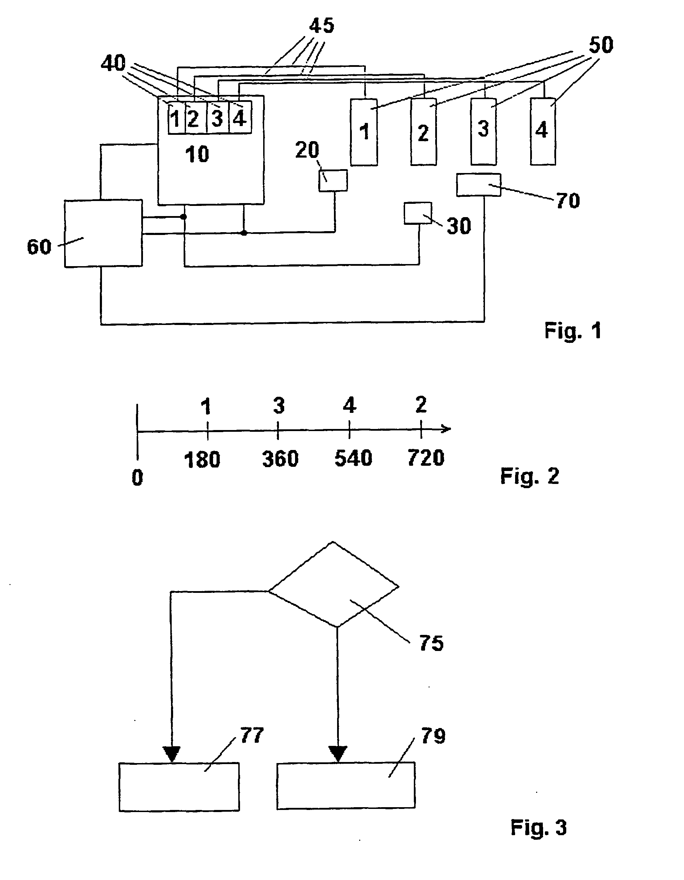

In Figur 1 ist ein Verbrennungsmotor mit 4 Zylindern dargestellt. Ein Verbrennungsmotor mit mehr oder weniger als 4 Zylindern ist analog zu Figur 1 aufgebaut. Der Verbrennungsmotor in Figur 1 beinhaltet ein Zündsteuergerät 10, das mit einem Drehzahlgeber 20 und einem Phasengeber 30 verbunden ist. Das Zündsteuergerät 10 bedient die jeweils einem Zylinder 1 bis 4 zugeordneten Zündspulen 40. Das Zündsteuergerät 10 und damit die Zündspulen 40 sind über Zündsteuerleitungen 45 mit den mit 1 bis 4 bezeichneten Zündkerzen 50 verbunden, wobei die Zündspulen 40 jeweils mit einer in ihrer Nummerierung übereinstimmenden Zündkerze verbunden sind. Das heißt, die Zündkerze 1 ist dem Zylinder 1, die Zündkerze 2 dem Zylinder 2, die Zündkerze 3 dem Zylinder 3 und die Zündkerze 4 dem Zylinder 4 zugeordnet. Zu dem Verbrennungsmotor gehört weiterhin eine Klopfregelvorrichtung 60, die mit dem Zündsteuergerät 10 und einem oder mehreren Klopfsensoren 70 verbunden ist. Es ist möglich, das Zündsteuergerät 10 und die Klopfregelvorrichtung 60 in einem Motor-/Universalsteuergerät zusammenzufassen. Desweiteren ist die Klopfregelung auch mit dem Drehzahlgeber 20 und dem Phasengeber 30 verbunden. Die Klopfregelung stellt ein Winkelsignal für die Zündung bereit, um das Auftreten von Klopfen zu verhindern und gleichzeitig einen Betrieb des Motors in der Nähe des Klopfpunkts zu ermöglichen.

Der Drehzahlgeber 20 mißt die Drehzahl der Kurbelwelle. Weiterhin erlaubt der Drehzahlgeber durch das Vorhandensein einer Markierung zu bestimmen, wann die Kurbelwelle eine Umdrehung beendet hat. Der Phasengeber 30 mißt die Beendigung einer Umdrehung der Nockenwelle. Während des Ablaufs eines Viertakt-Zyklus' dreht sich die Kurbelwelle zwei Mal, also um 720 Grad. Es kann dabei nicht unterschieden werden, ob sich die Kurbelwelle im Winkelbereich von 0 bis 360 Grad oder im Winkelbereich von 360 bis 720 Grad befindet, d.h. es kann nicht bestimmt werden in welchem Takt des Viertakt-Zyklus' eines Verbrennungsmotors sich ein Zylinder gerade befindet. Die Nockenwelle dreht sich im gleichen Zeitraum einmal, also um 360 Grad. Über das Signal des Phasengebers 30 kann also bestimmt werden, in welcher Phase des Viertakt-Zyklus' sich jeder Zylinder befindet.

Die Zündreihenfolge der Zylinder mit den zugehörigen Grad Kurbelwinkel für einen 4-Zylinder-Verbrennungsmotor wird anhand eines Zeitstrahls in Figur 2 veranschaulicht. Auf dem Zeitstrahl sind bestimmte Zeitpunkte mit senkrechten Strichen gekennzeichnet.

Diesen Zeitpunkten ist unterhalb des Zeitstrahls die diesen Zeitpunkten entsprechende Stellung der Kurbelwelle in Grad zugeordnet. Oberhalb des Zeitstrahls ist der zum jeweiligen Zeitpunkt im Verbrennungs-Oberen Totpunkt befindliche Zylinder angeordnet. Der obere Totpunkt soll im Nachfolgenden mit OT bezeichnet werden. Da sich das Viertaktverfahren über zwei Kurbelwellenumdrehungen erstreckt, befindet sich der Kolben zwei Mal im OT, dem Umkehrpunkt des Kolbens, zum ersten Mal zu Beginn des Ansaugtaktes. Dieser OT wird mit Überschneidungs-OT bezeichnet. Zum zweiten Mal befindet sich der Kolben im OT zu Beginn des Arbeitstaktes. Dieser OT wird Verbrennungs-OT genannt. Das in der Brennkammmer befindliche Gemisch wird nur im Verbrennungs-OT gezündet und während des Arbeitstaktes verbrannt.

Über das Signal des Drehzahlgebers 20 allein kann nur eine Zuordnung zu den jeweils im OT befindlichen, sogenannten Zylindergruppen erfolgen. Beispielsweise befinden sich beim 4-Zylinder-Verbrennungsmotor gleichzeitig Zylinder 1 und 4 oder Zylinder 2 und 3 im OT. Es kann allein mit dem Signal des Drehzahlgebers nicht erfaßt werden, welcher Zylinder der Zylindergruppen sich im Verbrennungs-OT befindet.

Die Signale von Phasen- und Drehzahlgeber sind jedoch auch bedeutsam für die Klopfregelung. Die von dem Klopfsensor oder den Klopfsensoren 70 erfaßten Geräusche der Verbrennungsvorgänge in den Zylindern des Verbrennungsmotors und liefern entsprechende elektrische Signale an die Klopfregelvorrichtung 60. Dabei erfolgt die Aufnahme der Geräusche innerhalb eines bestimmten Zeitfensters nach der Zündung, dem sogenannten Meßfenster, das typisch für das Auftreten von Klopfprozessen ist. Anhand des vom Drehzahlgeber 20 und vom Phasengeber 30 kommenden Taktes kann das Meßfenster zeitlich richtig gesetzt werden und die elektrischen Signale einem Zylinder der Brennkraftmaschine zugeordnet werden. Die Klopfregelvorrichtung 60 enthält ein Speichermedium, das für jeden Zylinder einen Schwellwert speichert. Überschreitet das einem Zylinder zugeordnete
Verhältnis von integriertem Geräuschsignal des jeweiligen Verbrennungsvorgangs zu Grundgeräuschsignal diesen sogenannten Klopferkennungsschwellwert des zugehörigen Zylinders, dann erkennt die Klopfregelvorrichtung 60, daß während der Verbrennung in diesem Zylinder ein Klopfen aufgetreten ist. Das Grundgeräuschsignal ergibt sich dabei aus einem Mittelwert der integrierten Geräuschsignale über eine bestimmte Anzahl, z.B. 16, der davor stattgefundenen Verbrennungen. Die Klopfregelvorrichtung 60 gibt, wenn ein Klopfen erkannt wurde, an das Zündsteuergerät 10 Maßnahmen aus, um bei den darauffolgenden Verbrennungen das Klopfen zu unterbinden. Diese Maßnahmen sind insbesondere zylinderindividuell, beispielweise wird nur für den Zylinder, der gerade geklopft hat, eine Spätverstellung vorgenommen.

Wenn der Phasengeber 30 aus nicht genannten Gründen ausfällt, kann vom Zündsteuergerät 10 nicht mehr erkannt werden, welcher Zylinder sich gerade im Verbrennungs-OT befindet. Es besteht somit die Gefahr des Ausfallens des Verbrennungsmotors. Eine mögliche Maßnahme, die vom Steuergerät ergriffen werden kann, um das Ausfallen des Verbrennungsmotors zu verhindern, ist die Durchführung einer Doppelzündung, das heißt, daß in jedem OT jedes Zylinders gezündet wird. Damit wird sichergestellt, daß in jedem Fall im Verbrennungs-OT gezündet wird. Eine Doppelzündung kann aber aus anderen Gründen auch ohne Ausfall des Phasengebers aktiviert sein.

Die Funktionalität des Zündsteuergeräts 10 kann Maßnahmen beinhalten, die es erlauben, auch ohne Signal des Phasengebers 30 zu erkennen, welcher OT zum Arbeitstakt gehört.

Ein erstes Ausführungsbeispiel des erfindungsgemäßen Verfahrens ist in Figur 3 anhand eines Flußdiagramms dargestellt. Dabei wird angenommen, daß der Phasengeber 30 ausgefallen ist. Wird die Frage 75, ob eine Doppelzündung aktiviert wurde, mit nein beantwortet, so gelangt das Verfahren zur zylinderindividuellen Klopfregelung 77. Hier ist entweder die Synchronisation zufällig richtig, d.h. der Verbrennungsmotor läuft zufällig richtig, oder durch eine andere Maßnahme konnte eine Synchronisation trotz ausgefallenem Phasengeber erreicht werden.

Wird die Frage 75 mit ja beantwortet, d.h. liegt Doppelzündung vor, dann wird eine nicht zylinderindividuelle Maßnahme 79 aktiviert, die die weitere Klopfregelung beeinflußt. Die Klopfregelung ist in diesem Fall nicht in der Lage, ein Geräuschsignal als Klopfen eines bestimmten Zylinders zu identifizieren und/oder die Klopfregelung zylinderindividuell durchzuführen. Es muß deshalb bei Ausfall des Phasengebers 30 und bei Aktivierung der Doppelzündung eine Maßnahme ergriffen werden, die nicht zylinderindividuell ist.

Dabei kann zum Beispiel als eine nicht zylinderindividuelle Maßnahme eine für alle Zylinder einheitliche Klopferkennungsschwelle vorgegeben werden. Wegen der durch das Klopfen verursachten Beschädigungen des Motors wird dabei ein Schwellwert gewählt, der sicher ein Klopfen erkennt. Dabei wird in Kauf genommen, daß fehlerhaft zu viele klopfenden Verbrennungen erkannt werden, was zu einem Betrieb einzelner Zylindern weit weg von der Klopfgrenze führt.

Als eine andere Maßnahme kann allen Zylindern der gleiche fest voreingestellte Zündwinkel vorgegeben werden, bei dem kein Klopfen erfolgt. Diese Maßnahme wird Sicherheitsspätverstellung genannt. Ein derartiger fester Zündwinkel kann entweder ein von Motorparametern wie Last, Momentenanforderung und Temperatur unabhängiger fester Winkel oder ein von Motorparametern abhängiger fester Winkel sein. Der feste Winkel kann sich auch aus einem festen Wert und aus einem Differenzwert, dem sogenannten Differenzzündwinkel, zusammensetzen. Zündwinkel und Differenzzündwinkel können von Motorparametern abhängige oder unabhängige Winkel sein. In diesem Fall besteht die nicht zylinderindividuelle Maßnahme aus der festen Vorgabe dieses Differenzzündwinkels für alle Zylinder. Solche feste Zündwinkel oder Differenzzündwinkel sind vor Inbetriebnahme des Verbrennungsmotors festgelegt und im Speicher des Zündsteuergeräts 10 enthalten. Mit dieser Maßnahme wird ein Betrieb aller Zylinder weit weg von der Klopfgrenze bewirkt.

Sollte jedoch eine Doppelzündung nicht aktiviert sein, wird in dem erfindungsgemäßen Verfahren die zylinderindividuelle Klopfregelung durchgeführt, die das übliche Verfahren im normalen Betrieb des Motors ist.

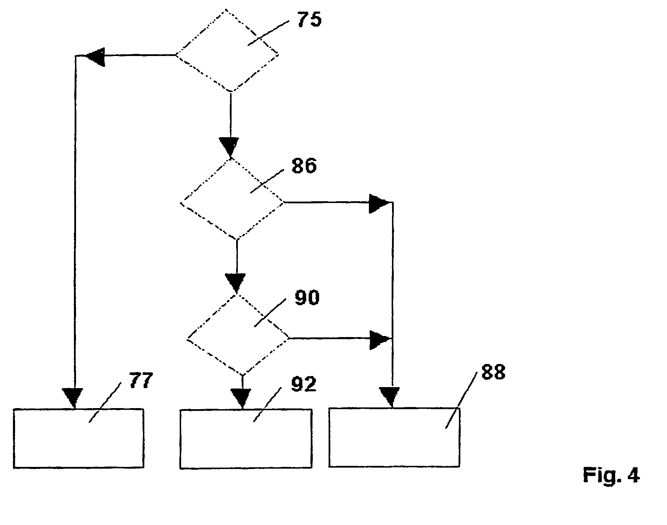

Ein weiteres Ausführungsbeispiel für ein erfindungsgemäßes Verfahren ist in Figur 4 anhand eines Flußdiagramms dargestellt. Ein derartiges Verfahren kann in einer Universalklopfregelung benutzt werden, die in verschiedenen Verbrennungsmotortypen eingesetzt werden kann, die sich in der Anzahl der Zylinder und der Anzahl der Klopfsensoren unterscheiden. Wie im vorangegangenen Beispiel wird wiederum vorausgesetzt, daß der Phasengeber ausgefallen ist. Analog wird zunächst die Frage 75 nach Aktivierung der Doppelzündung gestellt. Wird die Frage 75 mit nein beantwortet, so gelangt das Verfahren wiederum zur Maßnahme 77, der zylinderindividuellen Klopfregelung.

Wird die Frage 75 mit ja beantwortet, d.h. liegt Doppelzündung vor, dann ist eine weitere Differenzierung je nach Eigenschaften der Verbrennungsmaschine notwendig, um die richtige, nicht zylinderindividuelle Maßnahme zu ergreifen.

Das Verfahren gelangt nun zunächst zur Frage 86 nach dem Vorliegen einer ungeraden Zylinderzahl. Ist die Zylinderzahl des Verbrennungsmotors ungerade, d.h. wird die Frage 86 mit ja beantwortet, so gelangt das Verfahren zur Maßnahme 88, der Sicherheitsspätverstellung für alle Zylinder. Die Doppelzündung bewirkt bei ungerader Zylinderzahl, daß eine Zündung tatsächlich im Verbrennungs-OT dieses Zylinders stattfindet, die andere Zündung im Überschneidungs-OT, wobei kein anderer Zylinder sich zu dieser Zeit im Verbrennungs-OT befindet. Die Klopfregelung und damit die Einstellung des Meßfensters wird jedoch weiterhin mit der Frequenz der Einzelzündung vorgenommen. Obwohl der Verbrennungsmotor richtig läuft, ist wegen der fehlenden Phaseninformation die Synchronisation zwischen Zündung und Meßfenster der Klopfregelung unsicher, d.h. es ist nicht sicher, ob das Meßfenster nach dem Verbrennungs-OT gesetzt ist. Es muß deshalb in Sicherheitsspätverstellung gegangen werden.

Wird die Frage 86 mit nein beantwortet, d.h. liegt eine gerade Zylinderzahl vor, dann befindet sich, wenn ein Zylinder gerade im Überschneidungs-OT ist, der zweite Zylinder einer Zylindergruppe gerade im Verbennungs-OT, denn die Zündwinkel der Zylinder einer Zylindergruppe unterscheiden sich immer um 360 Grad Kurbelwinkel. Trotz Vorliegen einer Doppelzündung ist jetzt die Synchronisation bei gerader Zylinderzahl zwischen Verbrennung und Meßfenster richtig.

Nun gelangt das Verfahren zu einer nächsten Frage 90, ob das System ein oder mehrere Klopfsensoren beinhaltet. Falls zu dem System mehrere Klopfsensoren gehören, wird wiederum Maßnahme 88, die Sicherheitsspätverstellung für alle Zylinder, erreicht. Hier werden Geräusche von unterschiedlichen Klopfsensoren empfangen.

Aufgrund der fehlenden Phaseninformation ist keine Zuordnung des Klopfregelungs-Auswertepfades zu einem Klopfsensor möglich, deshalb ist Sicherheitsspätverstellung für alle Zylinder notwendig.

Ist in dem System nur ein Klopfsensor vorhanden, dann erreicht das Verfahren die Maßnahme 92, die Klopferkennung mit einem einzigen Schwellwert für alle Zylinder. Wie bereits festgestellt, kann bei gerader Zylinderzahl das Meßfenster des Klopfsensors in Bezug auf die Zündung richtig getaktet werden. Auch die Zuordnung dieses Meßfensters zu dem einzigen Klopfsensor ist gewährleistet. Somit kann eine Klopferkennung noch durchgeführt werden. Da jedoch die Zuordnung zu einem bestimmten Zylinder einer Zylindergruppe nicht möglich ist, wird ein Klopferkennungsschwellwert für alle Zylinder verwendet. Dieser eine Klopferkennungsschwellwert tritt an die Stelle der zylinderspezifischen Klopferkennungsschwellwerte, die bei der normalen Klopfregelung verwendet werden. Er bildet im Allgemeinen das Minimum der zylinderspezifischen Schwellwerte, da mit größter Sicherheit ein Klopfen erkannt werden soll.

In dem erfindungsgemäßen Verfahren des Ausführungsbeispiels wird also ohne Aktivierung der Doppelzündung die zylinderindividuelle Klopfregelung durchgeführt und bei Aktivierung der Doppelzündung, je nach Aufbau des Verbrennungsmotors und des Klopfregelsystems, entweder die Maßnahme Sicherheitsspätverstellung ergriffen oder eine Klopferkennungsschwelle für alle Zylinder benutzt. Diese beiden Maßnahmen arbeiten nicht zylinderindividuell. Während bei der Maßnahme Sicherheitsspätverstellung keine Klopferkennung mehr durchgeführt wird und eine grundsätzliche Spätverstellung des Zündwinkels erfolgt, kann durch die Klopferkennung mit einem Schwellwert für alle Zylinder noch eine Klopfregelung durchgeführt werden, die unter Umständen einen höheren Wirkungsgrad der Verbrennung bewirkt. Sollte jedoch der Motortyp so beschaffen sein, daß die Maßnahme Klopferkennung mit einem Schwellwert für alle Zylinder nicht erreicht werden kann, dann ist ein sicheres Erreichen einer nicht klopfenden Verbrennung durch Sicherheitsspätverstellung dem Erzielen eines hohen Wirkungsgrades vorzuziehen.

## Patentansprüche

1. Verfahren zur Klopfregelung eines Verbrennungsmotors mit mehreren Zylindern, denen jeweils eine Zündspule (40) zur Erzeugung eines Zündfunkens für eine in den jeweiligen Zylindern angeordnete Zündkerze (50) zugeordnet ist, wobei durch ein Signal eines Drehzahlgebers (20) ermittelt wird, in welchem Zylinder sich ein Kolben am oberen Totpunkt befindet, wobei durch ein Signal eines Phasengebers (30) ermittelt wird, welcher Zylinder(1, 2, 3, 4) sich in einem Arbeitstakt befindet, wobei bei vorhandenem Drehzahlgebersignal und vorhandenem Phasengebersignal für jeden Zylinder(1, 2, 3, 4) individuell ein Klopfregelsignal erzeugt wird, wobei bei einem Ausfall des Phasengebers (30) eine Doppelzündung aktivierbar ist, die in jedem oberen Totpunkt in jedem Zylinder(1, 2, 3, 4) einen Zündfunken erzeugt, **dadurch gekennzeichnet, dass** beim Ausfall des Phasengebers (30) bei aktivierter Doppelzündung eine Klopfregelung verwendet wird, die eine nicht zylinderindividuelle Maßnahme beinhaltet, und dass beim Ausfall des Phasengebers (30) bei nicht aktivierter Doppelzündung die normale, zylinderindividuelle Klopfregelung verwendet wird.

2. Verfahren nach Anspruch 1 **dadurch gekennzeichnet, daß** für die nicht zylinderindividuellen Maßnahme zur Klopfregelung ein fester voreingestellter Zündwinkel oder Differenzzündwinkel verwendet wird.

3. Verfahren nach Anspruch 1 **dadurch gekennzeichnet, daß** als nicht zylinderindividuelle Maßnahme zur Klopfregelung für alle Zylinder zur Erkennung einer klopfenden Verbrennung ein einheitlicher Klopferkennungsschwellwert verwendet wird.

4. Verfahren nach den Ansprüchen 2 und 3 **dadurch gekennzeichnet, daß** in Abhängigkeit von Parametern, die dem Aufbau des Verbrennungsmotors mit Klopfregelung entspechen, in einem Universalsteuergerät eine passende nicht zylinderindividuelle Maßnahme ausgewählt wird.

5. Verfahren nach Anspruch 4 **dadurch gekennzeichnet, daß** diese Parameter die Anzahl der Zylinder und die Anzahl der Klopfsensoren sind.

6. Vorrichtung zur Klopfregelung eines Verbrennungsmotors mit mehreren Zylindern, denen jeweils eine Zündspule (40) zur Erzeugung eines Zündfunkens für eine in den jeweiligen Zylindern angeordnete Zündkerze (50) zugeordnet ist, wobei zu dem Verbrennungsmotor ein Drehzahlgeber (20) gehört, der zur Ermittlung des oberen Totpunkts eines Zylinders dient, wobei zu dem Verbrennungsmotor ein Phasengeber (30) gehört, der zur Ermittlung des sich im Arbeitstakt befindlichen Zylinders dient, wobei die Klopfregelung bei korrekter Funktion des Drehzahlgebers (20) und des Phasengebers (30) ein für jeden Zylinder individuelles Klopfregelungssignal erzeugt, wobei bei einem Ausfall des Phasengebers (30) eine Vorrichtung zur Erzeugung einer Doppelzündung vorhanden ist, die in jedem oberen Totpunkt in jedem Zylinder (1, 2, 3, 4) einen Zündfunke erzeugt, **dadurch gekennzeichnet, dass** die Klopfregelungsvorrichtung (60) beim Ausfall des Phasengebers (30) bei aktivierter Doppelzündvorrichtung die Klopfregelung mit einer nicht zylinderindividuelle Maßnahme betreibt, und dass die Klopfregelungsvorrichtung (60) beim Ausfall des Phasengebers (30) bei nicht aktivierter Doppelzündvorrichtung die Klopfregelung mit einer normalen, zylinderindividuellen Maßnahme betreibt.

7. Vorrichtung nach Anspruch 6 **dadurch gekennzeichnet, daß** in der Klopfregelungsvorrichtung als nicht zylinderindividuelle Maßnahme an das Zündsteuergerät (10) ein fest voreingestellter Zündwinkel oder Differenzzündwinkel weitergegeben wird.

8. Vorrichtung nach Anspruch 6 **dadurch gekennzeichnet, daß** in der Klopfregelungsvorrichtung als nicht zylinderindividuelle Maßnahme zur Klopfregelung für alle Zylinder ein einheitlicher Klopferkennungsschwellwert realisiert ist.

9. Vorrichtung nach den Ansprüchen 7 und 8 **dadurch gekennzeichnet, daß** in Abhängigkeit von Parametern, die dem Aufbau des Verbrennungsmotors mit Klopfregelung entspechen, in einem Universalsteuergerät eine Auswahl der passenden nicht zylinderindividuellen Maßnahme erfolgt.

10. Vorrichtung nach Anspruch 9, **dadurch gekennzeichnet, dass** diese Parameter die Anzahl der Zylinder(1, 2, 3, 4) und die Anzahl der Klopfsensoren (70) sind.

## Claims

1. Method for the knock control of an internal combustion engine with multiple cylinders, to each of which an ignition coil (40) is assigned for generating an ignition spark for a spark plug (50) arranged in each of the cylinders, it being determined by a signal from a rotational-speed sensor (20) in which cylinder a piston is at the top dead centre, it being determined by a signal from a phase sensor (30) which cylinder (1, 2, 3, 4) is engaged in a power stroke, a knock control signal being generated for each cylinder (1, 2, 3, 4) individually in the presence of a rotational-speed sensor signal and a phase sensor signal, it being possible to activate dual-spark ignition in the event of a failure of the phase sensor (30), which ignition produces an ignition spark in each cylinder (1, 2, 3, 4) at each top dead centre, **characterized in that**, in the event of the phase sensor (30) failing with dual-spark ignition activated, knock control is adopted, which includes a non-individual-cylinder measure, and **in that**, in the event of the phase sensor (30) failing with dual-spark ignition inactivated, the normal individual-cylinder knock control is adopted.

2. Method according to Claim 1, **characterized in that** a pre-set ignition advance angle or differential ignition advance angle is adopted as non-individual-cylinder knock control measure.

3. Method according to Claim 1, **characterized in that** a uniform knock-sensing threshold for the detection of knocking combustion is adopted as non-individual-cylinder knock control measure for all cylinders.

4. Method according to Claims 2 and 3, **characterized in that** an appropriate non-individual-cylinder measure is selected in a universal control unit as a function of parameters corresponding to the structure of the internal combustion engine with knock control.

5. Method according to Claim 4, **characterized in that** the said parameters are the number of cylinders and the number of knock sensors.

6. Device for the knock control of an internal combustion engine with multiple cylinders, to each of which an ignition coil (40) is assigned for generating an ignition spark for a spark plug (50) arranged in each of the cylinders, a rotational-speed sensor (20) being assigned to the internal combustion engine and serving to detect the top dead centre of a cylinder, a phase sensor (30) being assigned to the internal combustion engine and serving to detect the cylinder engaged in the power stroke, the knock control generating an individual knock control signal for each cylinder when the rotational-speed sensor (20) and the phase sensor (30) are functioning correctly, there being a device for generating dual-spark ignition in the event of a failure of the phase sensor (30), which device produces an ignition spark in each cylinder (1, 2, 3, 4) at each top dead centre, **characterized in that**, in the event of the phase sensor (30) failing with dual-spark ignition activated, the knock control device (60) operates knock control with a non-individual-cylinder measure, and **in that**, in the event of the phase sensor (30) failing with dual-spark ignition inactivated, the knock control device (60) operates the knock control with a normal individual-cylinder measure.

7. Device according to Claim 6, **characterized in that** in the knock control device a pre-set ignition advance angle or differential ignition advance angle is relayed to the ignition control unit (10) as non-individual-cylinder measure.

8. Device according to Claim 6, **characterized in that** in the knock control device a uniform knock-sensing threshold for all cylinders is implemented as non-individual-cylinder knock control measure.

9. Device according to Claims 7 and 8, **characterized in that** the appropriate non-individual-cylinder measure is selected in a universal control unit as a function of parameters corresponding to the structure of the internal combustion engine with knock control.

10. Device according to Claim 9, **characterized in that** the said parameters are the number of cylinders (1, 2, 3, 4) and the number of knock sensors (70).

## Revendications

1. Procédé de régulation anti-cliquetis d'un moteur à combustion interne comportant plusieurs cylindres équipés chacun d'une bobine d'allumage (40) pour générer une étincelle d'allumage de la bougie d'allumage (50) associée aux cylindres respectifs, selon lequel :
on détermine par un signal d'un capteur de vitesse de rotation (20) le cylindre dans lequel le piston se trouve au point mort haut,
on détermine à l'aide d'un signal d'un capteur de phase (30) le cylindre (1, 2, 3, 4) qui se trouve dans un temps de travail, et
en cas de signal de capteur de vitesse de rotation et de capteur de signal de phase pour chaque cylindre (1, 2, 3, 4) on génère individuellement un signal de régulation de cliquetis, et
en cas de défaillance du capteur de phase (30) on active un double allumage consistant à générer une étincelle d'allumage à chaque point mort haut dans chaque cylindre (1, 2, 3, 4),
**caractérisé en ce qu'**
en cas de défaillance du capteur de phase (30) lorsque le double allumage est activé on utilise une régulation anti-cliquetis qui comporte une mesure non individuelle par cylindre, et
en cas de défaillance du capteur de phase (30) lorsque le double allumage n'est pas activé on utilise la régulation anti-cliquetis normale, individuelle par cylindre.

2. Procédé selon la revendication 1,
**caractérisé en ce que**
pour la mesure non individuelle par cylindre pour la régulation anti-cliquetis on utilise un angle d'allumage fixe préréglé ou un angle d'allumage de différence.

3. Procédé selon la revendication 1,
**caractérisé en ce que**
comme mesure non individuelle par cylindre pour la régulation anti-cliquetis on utilise pour tous les cylindres un seuil de détection de cliquetis uniforme pour déceler une combustion avec cliquetis.

4. Procédé selon l'une quelconque des revendications 2 et 3,
**caractérisé en ce que**
selon les paramètres qui correspondent à la structure du moteur à combustion interne avec régulation anti-cliquetis, dans un appareil de commande universel on sélectionne une mesure adaptée non individuelle par cylindre.

5. Procédé selon la revendication 4,
**caractérisé en ce que**
les paramètres sont le nombre de cylindres et le nombre de capteurs de cliquetis.

6. Dispositif de régulation anti-cliquetis d'un moteur à combustion interne à plusieurs cylindres auquel est associée chaque fois une bobine d'allumage (40) pour générer une étincelle d'allumage pour la bougie d'allumage (50) associée à chaque cylindre, dans lequel
le moteur à combustion interne comporte un capteur de vitesse de rotation (30) servant à déterminer le point mort haut d'un cylindre,
le moteur à combustion interne comporte un capteur de phase (30) servant à déterminer le cylindre qui se trouve dans le temps de travail,
la régulation anti-cliquetis générant pour chaque cylindre un signal de régulation anti-cliquetis individuel si le capteur de vitesse de rotation (20) et le capteur de phase (30) fonctionnent correctement, et
en cas de défaillance du capteur de phase (30), un dispositif génère un double allumage fournissant une étincelle d'allumage à chaque point mort haut dans chaque cylindre (1, 2, 3, 4),
**caractérisé en ce qu'**
en cas de défaillance du capteur de phase (30), lorsque le double allumage est activé, le dispositif de régulation anti-cliquetis (60) fait fonctionner la régulation anti-cliquetis avec une mesure non individuelle par cylindre, et
en cas de défaillance du capteur de phase (30) alors que le dispositif à double allumage n'est pas activé, le dispositif de régulation anti-cliquetis (60) fait fonctionner la régulation anti-cliquetis avec une mesure normale individuelle par cylindre.

7. Dispositif selon la revendication 6,
**caractérisé en ce qu'**
un angle d'allumage fixe préréglé ou un angle d'allumage de différence sont transmis dans le dispositif de régulation anti-cliquetis comme mesure non individuelles par cylindre à l'appareil de commande d'allumage (10).

8. Dispositif selon la revendication 6,
**caractérisé en ce que**
dans le dispositif de régulation anti-cliquetis, on réalise comme mesure non individuelle par cylindre pour la régulation anti-cliquetis, un seuil de détection de cliquetis uniforme pour tous les cylindres.

9. Dispositif selon l'une quelconque des revendications 7 et 8,
**caractérisé en ce que**
selon les paramètres qui correspondent à la structure du moteur à combustion interne avec régulation anti-cliquetis, dans un appareil de commande universel on sélectionne la mesure non individuelle par cylindre adaptée.

10. Dispositif selon la revendication 9,
**caractérisé en ce que**
les paramètres sont le nombre de cylindres (1, 2, 3, 4) et le nombre de capteurs de cliquetis (70).
